# EUROPÄISCHE PATENTSCHRIFT

(11) **EP 4 269 907 B1**
(45) Veröffentlichungstag und Bekanntmachung des Hinweises auf die Patenterteilung: **28.01.2026**
(21) Anmeldenummer: 23160494.3
(22) Anmeldetag: 07.03.2023
(51) Int. Cl.: F25B 23/00, F03G 7/06

(54) **ELASTOKALORISCHE WÄRMEPUMPE UND KRAFTFAHRZEUG MIT EINER ELASTOKALORISCHEN WÄRMEPUMPE**
ELASTOCALORIC HEAT PUMP AND MOTOR VEHICLE HAVING AN ELASTOCALORIC HEAT PUMP
POMPE À CHALEUR ÉLASTOCALORIQUE ET VÉHICULE AUTOMOBILE ÉQUIPÉ D'UNE POMPE À CHALEUR ÉLASTOCALORIQUE

(30) Priorität: 25.04.2022 DE 102022203994
(43) Veröffentlichungstag der Anmeldung: 01.11.2023
(73) Patentinhaber: VOLKSWAGEN AG, 38440 Wolfsburg (DE)
(72) Erfinder: Olfe, Jürgen, 38543 Volkse (DE); Schneck, Christian, 38104 Braunschweig (DE)
(74) Vertreter: RGTH

(56) Entgegenhaltungen:
- CN-A- 113 757 853
- DE-A1- 102019 113 696
- DE-A1- 102019 203 396
- US-A1- 2020 217 566

## Beschreibung

Die vorliegende Erfindung betrifft eine Wärmepumpe umfassend einen ersten Kühlmittelkanal für einen ersten Kühlmittelstrom, einen zweiten Kühlmittelkanal für einen zweiten Kühlmittelstrom, mindestens ein erstes elastokalorisches Element, mindestens ein zweites elastokalorisches Element und ein Triebelement, wobei das erste elastokalorische Element in dem ersten Kühlmittelkanal angeordnet ist, wobei das zweite elastokalorische Element in dem zweiten Kühlmittelkanal angeordnet ist, wobei das Triebelement ausgebildet ist, das erste elastokalorische Element zyklisch zu verformen und das zweite elastokalorische Element zyklisch zu verformen.

Darüber hinaus betrifft die vorliegende Erfindung ein Kraftfahrzeug mit einer Wärmepumpe.

Zur Effizienzsteigerung von Wärmepumpen in Kraftfahrzeugen können elastokalorische Wärmepumpen verwendet werden. In einer elastokalorischen Wärmepumpe wird der elastokalorische Effekt genutzt, wobei durch zyklische Deformation eines elastokalorischen Materials eine reversible Temperaturänderung hervorgerufen wird, welche für die Übertragung von Wärme von einem kälteren Kühlmittelstrom auf einen wärmeren Kühlmittelstrom genutzt werden kann. Derartige elastokalorische Wärmepumpen benötigen jedoch einen sehr großen Bauraum. Zudem ist die effiziente Führung des Kühlmittels schwierig.

Aus der US 2015/0369524 A1 ist ein Kühl-/Heizmodul bekannt, welches zum Kühlen und Heizen von Luft ausgebildet ist. Das Kühl-/Heizmodul umfasst einen ersten und einen zweiten Kühl-/Heizabschnitt, welche jeweils ein thermoelastisches Material umfassen. Ferner ist ein Aktuator vorgesehen, der Spannung auf das thermoelastische Material ausübt. Ein Stellglied ist so konfiguriert, dass es abwechselnd den Vorgang des Aufbringens einer Spannung auf das thermoelastische Material des ersten Kühl-/Heizabschnitts und das Entfernen der Spannung vom thermoelastischen Material des zweiten Kühl-/Heizabschnitts und den Vorgang des Aufbringens einer Spannung auf das thermoelastische Material des zweiten Kühl-/Heizabschnitts und das Entfernen der Spannung vom thermoelastischen Material des ersten Kühl-/Heizabschnitts durchführt.

Aus der DE 10 2019 203 889 A1 ist eine Vorrichtung zum Wärmetausch bekannt, die einen steiferen äußeren Ring, einen flexiblen inneren Ring, elastokalorische Elemente, die radial zwischen dem äußeren Ring und dem inneren Ring gespannt sind, und ein rotierendes Formelement, das Einbuchtungen und/oder Ausbuchtungen aufweist, welche auf den inneren Ring wirken, umfasst.

Die WO 01/63186 A1 offenbart ein Wärmeübertragungsgerät, welches einen aktiven regenerativen Kreislauf umfasst. Das Wärmeübertragungsgerät verwendet ein aktives Fluid und ein Wärmeübertragungsfluid, welche physisch voneinander getrennt sind.

Ferner offenbart die US 2020 / 0 217 566 A1 eine mechanokalorische Wärmepumpe umfassend eine mechanokalorische Stufe, einen verlängerten Hebelarm, der um einen Punkt schwenkbar ist, und einen Motor, der einen Nocken drehen kann. Der langgestreckte Hebelarm ist mit der mechanokalorischen Stufe in der Nähe eines ersten Endabschnitts des langgestreckten Hebelarms und mit der Nocke in der Nähe eines zweiten Endabschnitts des langgestreckten Hebelarms gekoppelt, so dass der Motor die mechanokalorische Stufe durch Schwenken des langgestreckten Hebelarms bei der Drehung der Nocke betätigen kann. Zudem offenbart die DE 10 2019 113 696 A1 einen thermoelastischen Energiewandler umfassend eine Anordnung mit mehreren Wandlereinrichtungen, wobei jede der Wandlereinrichtungen ein oder mehrere in einer Erstreckungsrichtung angeordnete thermoelastische Elemente aufweist; eine Beaufschlagungseinrichtung, um die thermoelastischen Elemente jeder der mehreren Wandlereinrichtungen mit einem zeitlich variablen Kraftverlauf zu belasten, und eine Kopplung, die ausgebildet ist, so dass die Beaufschlagungseinrichtung die Wandlereinrichtungen bezüglich ihrer zyklischen Be- und Entlastung phasenversetzt ansteuert.

Der vorliegenden Erfindung liegt die Aufgabe zugrunde, eine elastokalorische Wärmepumpe bereitzustellen, welche eine kompakte Bauweise aufweist und bei welcher das für den Betrieb benötigte maximale Antriebsmoment reduziert ist.

Zur Lösung der der Erfindung zugrundeliegenden Aufgabe wird eine Wärmepumpe gemäß Anspruch 1 bereitgestellt.

Erfindungsgemäß sind das erste elastokalorische Element in dem ersten Kühlmittelkanal und das zweite elastokalorische Element in dem zweiten Kühlmittelkanal angeordnet und werden von dem Triebelement zyklisch verformt. Durch die zyklische Verformung, welche sowohl in Form einer positiven Dehnung, insbesondere einer Streckung, und eine negativen Dehnung, insbesondere einer Stauchung, ausgebildet sein kann, findet ein Phasenübergang in dem elastokalorischen Material des ersten elastokalorischen Elementes und des zweiten elastokalorischen Elementes statt, wodurch diese zyklisch erwärmt und abgekühlt werden. Das erste elastokalorische Element und das zweite elastokalorische Element können den elastokalorischen Effekt sowohl bei einer positiven und bei einer negativen Dehnung aufweisen. Dabei nimmt das in dem ersten Kühlmittelkanal angeordnete erste elastokalorische Element zyklisch von einem durch den ersten Kühlmittelkanal geführten ersten Kühlmittelstrom Wärme auf beziehungsweise gibt Wärme an diesen ab. Entsprechend nimmt das in dem zweiten Kühlmittelkanal angeordnete zweite elastokalorische Element zyklisch von einem durch den zweiten Kühlmittelkanal geführten zweiten Kühlmittelstrom Wärme auf beziehungsweise gibt Wärme an diesen ab.

Das erste elastokalorische Element und das zweite elastokalorische Element verbleiben dabei dauerhaft jeweils in dem ersten Kühlmittelkanal und in dem zweiten Kühlmittelkanal. Da jeder der beiden Kühlmittelströme in dem ersten Kühlmittelkanal und in dem zweiten Kühlmittelkanal zyklisch erwärmt und abgekühlt wird, entsprechen der erste Kühlmittelstrom und der zweite Kühlmittelstrom abwechselnd einem Kühlmittelstrom für eine Heißseite und einem Kühlmittelstrom für eine Kaltseite der Wärmepumpe.

Während der zyklischen Verformung des ersten elastokalorischen Elementes und des zweiten elastokalorischen Elementes nehmen diese zyklisch einen Dehnungszustand ein, in dem das jeweilige elastokalorische Element entweder positiv gedehnt, insbesondere gestreckt, oder negativ gedehnt, insbesondere gestaucht, ist. Der Dehnungszustand ist dabei von einem Entlastungszustand zu unterscheiden, bei dem das erste elastokalorische Element oder das zweite elastokalorische Element nicht gedehnt und mit keiner äußeren Kraft beaufschlagt sind.

Im Verlauf der zyklischen Verformung können das erste elastokalorische Element und das zweite elastokalorische Element zyklisch den Dehnungszustand und den Entlastungszustand einnehmen. Dies ist jedoch nicht zwingend erforderlich. Grundsätzlich ist es auch möglich, dass sich sowohl das erste als auch das zweite elastokalorische Element dauerhaft bzw. ununterbrochen in einem Dehnungszustand befinden und zu keinem Zeitpunkt den Entlastungszustand einnehmen.

Erfindungsgemäß ist vorgesehen, dass die Summe des Betrages der relativen Längenänderung des ersten elastokalorischen Elementes und des Betrages der relativen Längenänderung des zweiten elastokalorischen Elementes stets größer Null ist.

Die relativen Längenänderungen sind dabei auf den Entlastungszustand bezogen. Die relative Längenänderung wird auch Dehnung genannt. Im Falle einer Streckung des elastokalorischen Elementes wird von einer positiven Dehnung gesprochen. Wird das elastokalorische Element gestaucht, wird von einer negativen Dehnung gesprochen.

Mit anderen Worten befinden sich zu keinem Zeitpunkt beide elastokalorischen Elemente gleichzeitig im von Kräften unbelasteten Entlastungszustand. Es befinden sich entweder beide elastokalorischen Elemente in einem Dehnungszustand, das heißt sie sind entweder gestaucht oder gestreckt, oder aber es befindet sich ein elastokalorisches Element im Entlastungszustand, während sich das jeweils andere elastokalorische Element in einem Dehnungszustand befindet.

Dadurch, dass die Summe der Beträge der relativen Längenänderungen des ersten und des zweiten elastokalorischen Elementes stets größer Null ist, wird durchgehend eine Rückstellkraft von mindestens einem der elastokalorischen Elemente auf das Triebelement ausgeübt. Diese Rückstellkraft kann dazu genutzt werden, das von einem Antrieb für den Betrieb der Wärmepumpe aufzubringende maximal notwendige Antriebsmoment zu reduzieren. Versuche der Anmelderin haben gezeigt, dass mit einer erfindungsgemäßen Wärmepumpe das maximale benötigte Antriebsmoment um einen Faktor von bis zu 9 reduziert werden kann.

Bei dem Kühlmittel des ersten Kühlmittelstroms und bei dem Kühlmittel des zweiten Kühlmittelstroms kann es sich um Wasser oder ein Wasser-Glykol-Gemisch oder Luft handeln.

Das erste und das zweite elastokalorische Element können zudem eine Nickel-Titan-Legierung aufweisen oder aus einer Nickel-Titan-Legierung bestehen.

Bevorzugt ist vorgesehen, dass die Summe des Betrags der relativen Längenänderung des ersten elastokalorischen Elements und des Betrags der relativen Längenänderung des zweiten elastokalorischen Elements im Wesentlichen einer vorbestimmten maximalen Dehnung des ersten elastokalorischen Elements und/oder einer vorbestimmten maximalen Dehnung des zweiten elastokalorischen Elements entspricht.

Dies bedeutet, dass das erste elastokalorische Element sich im Entlastungszustand befindet, wenn das zweite elastokalorische Element die vorbestimmte maximale Dehnung aufweist, und dass das zweite elastokalorische Element sich im Entlastungszustand befindet, wenn das erste elastokalorische Element die vorbestimmte maximale Dehnung aufweist. Mit anderen Worten werden das erste elastokalorische Element und das zweite elastokalorische Element abwechselnd gedehnt, das heißt gestreckt oder gestaucht. Es kann daher abwechselnd für jedes der beiden elastokalorischen Elemente die gesamte vorbestimmte Dehnung und der sich daraus ergebende elastokalorische Effekt genutzt werden.

Mit weiterem Vorteil kann vorgesehen sein, dass die Wärmepumpe einen Antrieb, insbesondere einen Elektromotor, ausgebildet zum Antreiben des Triebelements umfasst.

Der Antrieb des Triebelementes kann wahlweise mit konstanter Drehzahl oder durch Schrittmotor oder geeignete Getriebe auch mit nicht konstanter Drehzahl erfolgen.

Da wie vorstehend erläutert die Summe der Beträge der relativen Längenänderungen des ersten und des zweiten elastokalorischen Elements stets größer Null ist und somit die Rückstellkräfte der gedehnten elastokalorischen Elemente für die Reduzierung des benötigten Antriebsmomentes genutzt werden können, kann der Antrieb der Wärmepumpe, insbesondere der Elektromotor, kompakt ausgestaltet werden.

Bevorzugt ist daher vorgesehen, dass das erste elastokalorische Element und das zweite elastokalorische Element und das Triebelement derart angeordnet und miteinander verbunden sind, dass ein für die zyklische Verformung des ersten elastokalorischen Elements und für die zyklische Verformung des zweiten elastokalorischen Elements von dem Antrieb aufzubringendes Antriebsmoment nur einem für die Überwindung einer Materialhysterese des ersten elastokalorischen Elements und des zweiten elastokalorischen Elements und für die Überwindung einer Reibung notwendigen Moment entspricht.

Mit weiterem Vorteil ist vorgesehen, dass das erste elastokalorische Element und das zweite elastokalorische Element und das Triebelement derart angeordnet und miteinander verbunden sind, dass das erste elastokalorische Element während der zyklischen Verformung ausschließlich auf Zug oder ausschließlich auf Druck belastet wird, und dass das zweite elastokalorische Element während der zyklischen Verformung ausschließlich auf Druck oder ausschließlich auf Zug belastet wird.

Wird das erste elastokalorische Element beispielsweise ausschließlich auf Zug belastet, so bedeutet dies, dass das erste elastokalorische Element während der zyklischen Verformung nie gestaucht beziehungsweise im Stauchungsbereich beansprucht wird. Wird das erste elastokalorische Element ausschließlich auf Druck belastet, so wird das erste elastokalorische Element während der zyklischen Verformung nie gestreckt beziehungsweise im Streckungsbereich beansprucht.

Dabei können je nach Anordnung des ersten elastokalorischen Elements und des zweiten elastokalorischen Elements und des Triebelements unterschiedliche Kombinationen von ausschließlich auf Zug oder ausschließlich auf Druck belasteten ersten elastokalorischen Elementen und zweiten elastokalorischen Elementen vorgesehen sein.

So ist es beispielsweise möglich, dass das erste elastokalorische Element während der zyklischen Verformung ausschließlich auf Zug und das zweite elastokalorische Element während der zyklischen Verformung ausschließlich auf Druck belastet wird. Ebenso ist der umgekehrte Fall möglich. Darüber hinaus kann vorgesehen sein, dass sowohl das erste elastokalorische Element als auch das zweite elastokalorische Element während der zyklischen Verformung ausschließlich auf Zug belastet werden oder dass sowohl das erste elastokalorische Element als auch das zweite elastokalorische Element während der zyklischen Verformung ausschließlich auf Druck belastet werden.

Mit weiterem Vorteil kann vorgesehen sein, dass genau ein Triebelement vorgesehen ist.

Darüber hinaus kann vorgesehen sein, dass das erste elastokalorische Element über ein Drehgelenk mit einer äußeren Wand des ersten Kühlmittelkanals verbunden ist, und/oder dass das zweite elastokalorische Element über ein Drehgelenk mit einer äußeren Wand des zweiten Kühlmittelkanals verbunden ist.

Es kann aber auch vorgesehen sein, dass das erste elastokalorische Element über ein Festlager mit einer äußeren Wand des ersten Kühlmittelkanals verbunden ist, und/oder dass das zweite elastokalorische Element über ein Festlager mit einer äußeren Wand des zweiten Kühlmittelkanals verbunden ist.

Ferner ist insbesondere bevorzugt vorgesehen, dass das Triebelement im Wesentlichen zwischen dem ersten Kühlmittelkanal und dem zweiten Kühlmittelkanal angeordnet ist.

Bevorzugt weisen sowohl das erste elastokalorische Element und das zweite elastokalorische Element jeweils ein Verbindungselement mit dem zwischen dem ersten und dem zweiten Kühlmittelkanal angeordneten Triebelement auf.

Bei dem Verbindungselement kann es sich jeweils um eine unverschwenkbar mit dem jeweiligen elastokalorischen Element verbundene Stange handeln. Die Stange kann direkt mit dem Triebelemement oder über ein zwischengeschaltetes Pleuel mit dem Triebelement verbunden sein.

Erfindungsgemäß ist vorgesehen, dass das Triebelement eine Kurbelwelle ist.

Ferner kann bevorzugt vorgesehen sein, dass ein Kurbelradius der Kurbelwelle der Hälfte der vorbestimmten maximalen Dehnung des ersten elastokalorischen Elements und/oder der Hälfte der vorgesehenen maximalen Dehnung des zweiten elastokalorischen Elements entspricht.

Der Kurbelradius beziehungsweise Hebelarm der Kurbelwelle wird somit so eingestellt, dass er der Hälfte der gewünschten maximalen Dehnung mindestens eines der elastokalorischen Elemente entspricht. Insbesondere wird durch die Wahl des Kurbelradius bzw. Hebelarms die gewünschte Dehnung, das heißt Stauchung oder Streckung des jeweiligen elastokalorischen Elements eingestellt. Wenn das erste elastokalorische und das zweite elastokalorische Element jeweils mit einer anderen Kurbelwellenkröpfung der Kurbelwelle verbunden sind, so können auch für beide elastokalorischen Elemente unterschiedliche Kurbelradien beziehungsweise Hebelarme gewählt und eingestellt werden.

Bevorzugt ist vorgesehen, dass das erste elastokalorische Element und das zweite elastokalorische Element mit derselben Kurbelwellenkröpfung der Kurbelwelle verbunden sind, oder dass das erste elastokalorische Element und das zweite elastokalorische Element mit verschiedenen, bevorzugt um 180° versetzten, Kurbelwellenkröpfungen der Kurbelwelle verbunden sind.

Dabei ist es für den Fall, dass das erste elastokalorische Element und das zweite elastokalorische Element mit derselben Kurbelwellenkröpfung der Kurbelwelle verbunden sind, besonders bevorzugt vorgesehen, dass beide elastokalorischen Elemente entweder ausschließlich auf Druck oder beide elastokalorischen Elemente ausschließlich auf Zug belastet werden. Sind hingegen das erste elastokalorische Element und das zweite elastokalorische Element mit verschiedenen, bevorzugt um 180° versetzten, Kurbelwellenkröpfungen der Kurbelwelle verbunden, so ist bevorzugt vorgesehen, dass das erste elastokalorische Element ausschließlich auf Druck belastet wird und dass das zweite elastokalorische Element ausschließlich auf Zug belastet wird, oder dass umgekehrt das erste elastokalorische Element ausschließlich auf Zug belastet wird und das zweite elastokalorische Element ausschließlich auf Druck belastet wird.

Durch diese bevorzugten Kombinationen von auf Druck und auf Zug belasteten elastokalorischen Elementen wird sichergestellt, dass stets eine das notwendige Antriebsmoment reduzierende Rückstellkraft von dem ersten und dem zweiten elastokalorischen Element auf die Kurbelwelle ausgeübt wird.

Erfindungsgemäß ist vorgesehen, dass das Triebelement eine Nockenwelle ist.

Erfindungsgemäß ist vorgesehen, dass eine Differenz aus einem maximalem und einem minimalem Nockenhub eines Nockens der Nockenwelle der vorgesehenen maximalen Dehnung des ersten elastokalorischen Elements und/oder der vorgesehenen maximalen Dehnung des zweiten elastokalorischen Elements entspricht.

Ferner kann mit Vorteil vorgesehen sein, dass das erste elastokalorische Element mit einem ersten Abtastmittel, bevorzugt einem ersten Wälzlager, insbesondere bevorzugt einem ersten Nadellager, verbunden ist, wobei das erste Abtastmittel auf einer Nockenkontur eines ersten Nockens der Nockenwelle abläuft, und dass das zweite elastokalorische Element mit einem zweiten Abtastmittel, bevorzugt einem zweiten Wälzlager, insbesondere bevorzugt einem zweiten Nadellager, verbunden ist, wobei das zweite Abtastmittel auf einer Nockenkontur eines zweiten Nockens der Nockenwelle abläuft.

Durch die Ausgestaltung bzw. Formgebung der Nockenkontur des ersten Nockens und der Nockenkontur des zweiten Nockens kann der zeitliche Verlauf der Dehnung des ersten und des zweiten elastokalorischen Elements eingestellt werden.

Insbesondere werden bevorzugt die Nockenkonturen des ersten und des zweiten Nockens so gewählt, dass sich das erste elastokalorische Element und das zweite elastokalorische Element in einem verhältnismäßig langen Zeitraum im Zustand der maximalen beziehungsweise minimalen Dehnung befinden, während der Zeitraum des Übergangs zwischen der maximalen und der minimalen Dehnung für jedes der elastokalorischen Elemente so kurz wie möglich ist.

Mit weiterem Vorteil kann vorgesehen sein, dass das erste Abtastmittel auf einem dem ersten elastokalorischen Element zugewandten Bereich der Nockenkontur des ersten Nockens der Nockenwelle abläuft oder dass das erste Abtastmittel auf einem dem ersten elastokalorischen Element abgewandten Bereich der Nockenkontur des ersten Nockens der Nockenwelle abläuft, und/oder dass das zweite Abtastmittel auf einem dem zweiten elastokalorischen Element zugewandten Bereich der Nockenkontur des zweiten Nockens der Nockenwelle abläuft oder dass das zweite Abtastmittel auf einem dem zweiten elastokalorischen Element abgewandten Bereich der Nockenkontur des zweiten Nockens der Nockenwelle abläuft.

Wenn das erste Abtastmittel auf einem dem ersten elastokalorischen Element zugewandten Bereich der Nockenkontur des ersten Nockens der Nockenwelle abläuft, so wird das erste elastokalorische Element bevorzugt ausschließlich auf Druck belastet. Durch die Anordnung des zweiten Abtastmittels auf dem dem zweiten elastokalorischen Element abgewandten Bereich der Nockenkontur des zweiten Nockens der Nockenwelle wird gleichzeitig das zweite elastokalorische Element ausschließlich im Zugbereich betrieben. Durch diese vorteilhafte Anordnung der Abtastmittel kann somit sichergestellt werden, dass die von dem ersten und zweiten elastokalorischen Element ausgeübten Rückstellkräfte zusammenwirkend zu einer vorteilhaft nutzbaren Reduzierung des notwendigen Antriebmoments verwendet werden können.

Für die Verbindung des auf dem dem zweiten elastokalorischen Element abgewandten Bereich der Nockenkontur des zweiten Nockens ablaufenden zweiten Abtastmittels mit dem zweiten elastokalorischen Element kann dabei ein Käfig vorgesehen sein, welcher den zweiten Nocken umschließt, wobei an der dem zweiten elastokalorischen Element abgewandten Seite des Käfigs das Abtastmittel angeordnet ist und auf dem zweiten Nocken abläuft. Das zweite elastokalorische Element kann dann mit der dem zweiten elastokalorischen Element zugewandten Seite des Käfigs verbunden sein.

Mit weiterem Vorteil kann vorgesehen sein, dass eine erste Linearführung für das erste elastokalorische Element vorgesehen ist, und/oder dass eine zweite Linearführung für das zweite elastokalorische Element vorgesehen ist.

Für die Verbindungen zwischen dem ersten elastokalorischen Element und dem zweiten elastokalorischen Element mit dem Triebelement können zur Ausbildung der ersten Linearführung und der zweiten Linearführung Pleuelstangen vorgesehen sein.

Mit weiterem Vorteil kann eine Umleitvorrichtung vorgesehen sein, wobei die Umleitvorrichtung ausgebildet ist, den aus dem ersten Kühlmittelkanal austretenden ersten Kühlmittelstrom und den aus dem zweiten Kühlmittelkanal austretenden zweiten Kühlmittelstrom zyklisch und/oder abwechselnd in einen ersten Kühlmittelauslass und einen zweiten Kühlmittelauslass umzuleiten.

Da sowohl im ersten Kühlmittelkanal als auch im zweiten Kühlmittelkanal das jeweils darin angeordnete elastokalorische Element abwechselnd erwärmt und abgekühlt wird, wird auch der durch den jeweiligen ersten und zweiten Kühlmittelkanal strömende Kühlmittelstrom abwechselnd erwärmt und abgekühlt. Um am Ausgang der Wärmepumpe einen konstant heißen oder einen konstant kalten Kühlmittelstrom zu erzielen, können die austretenden Kühlmittelströme aus dem ersten Kühlmittelkanal und dem zweiten Kühlmittelkanal durch die Umleitvorrichtung je nach Phase des jeweiligen Zyklus in den ersten Kühlmittelauslass oder den zweiten Kühlmittelauslass umgeleitet werden.

Der erste Kühlmittelauslass kann dann beispielsweise eine Heißseite und der zweite Kühlmittelauslass kann eine Kaltseite der Wärmepumpe darstellen.

Die Umleitvorrichtung kann beispielsweise durch eine geeignete Blenden- oder Ventilsteuerung bereitgestellt werden.

Darüber hinaus kann vorgesehen sein, dass die Steuerung der Umleitvorrichtung direkt oder über ein mit dem Triebelement, insbesondere mit der Kurbelwelle oder der Nockenwelle, verbundenes Getriebe erfolgt.

Bevorzugt kann ferner vorgesehen sein, dass in dem ersten Kühlmittelkanal mehrere erste elastokalorische Elemente und in dem zweiten Kühlmittelkanal mehrere zweite elastokalorische Elemente angeordnet sind, wobei jeweils ein erstes und ein zweites elastokalorisches Element einander paarweise zugeordnet und mit dem Triebelement verbunden sind. Durch diese Staffelung der ersten und zweiten elastokalorischen Elemente kann die Kälte- oder Wärmeleistung der Wärmepumpe erhöht werden und ferner kann die Wuchtung des Triebelements, insbesondere der Kurbelwelle oder der Nockenwelle, verbessert werden.

Eine weitere Lösung der der Erfindung zugrundeliegenden Aufgabe besteht in der Bereitstellung eines Kraftfahrzeugs umfassend eine vorbeschriebene Wärmepumpe.

Die Erfindung wird nachstehend näher anhand der beigefügten Figuren erläutert. Es zeigen
- Fig. 1: eine erste Ausführungsform der Erfindung einer Wärmepumpe,
- Fig. 2: eine zweite Ausführungsform einer Wärmepumpe,
- Fig. 3: eine dritte Ausführungsform einer Wärmepumpe,
- Fig. 4: eine vierte Ausführungsform einer Wärmepumpe,
- Fig. 5: eine fünfte Ausführungsform einer Wärmepumpe, und
- Fig. 6: eine sechste Ausführungsform einer Wärmepumpe.

In den Figuren werden für identische oder einander entsprechende Elemente gleiche Bezugszeichen verwendet.

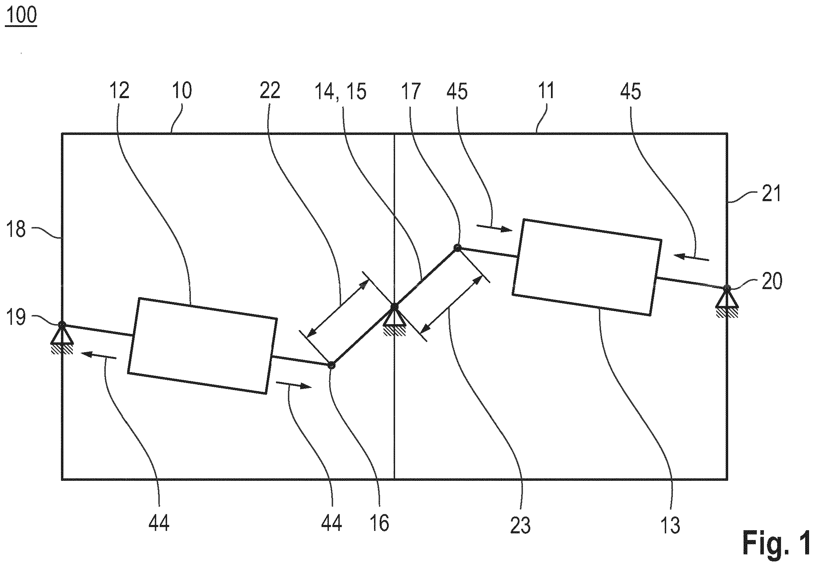

Fig. 1 zeigt eine erste Wärmepumpe 100 im Einklang mit der Erfindung. Die Wärmepumpe 100 umfasst einen ersten Kühlmittelkanal 10, durch den ein erster Kühlmittelstrom geführt wird, und einen zweiten Kühlmittelkanal 11, durch den ein zweiter Kühlmittelstrom geführt wird. Ein erstes elastokalorisches Element 12 ist in dem ersten Kühlmittelkanal 10 angeordnet, und ein zweites elastokalorisches Element 13 ist in dem zweiten Kühlmittelkanal 11 angeordnet. Zwischen den beiden elastokalorischen Elementen 12, 13 ist ein als Kurbelwelle 14 ausgebildetes Triebelement 15 angeordnet, welches mit dem ersten elastokalorischen Element 12 und dem zweiten elastokalorischen Element 13 kraftübertragungswirksam verbunden ist. Das erste elastokalorische Element 12 ist mit einer ersten Kurbelwellenkröpfung 16 und das zweite elastokalorische Element 13 mit einer zweiten Kurbelwellenkröpfung 17 verbunden. Zudem ist das erste elastokalorische Element 12 an einer äußeren Wand 18 des ersten Kühlmittelkanals 10 über ein Drehgelenk 19 befestigt. Das zweite elastokalorische Element 13 ist über ein weiteres Drehgelenk 20 mit der äußeren Wand 21 des zweiten Kühlmittelkanals 11 verbunden.

Die Anordnung von dem ersten elastokalorischen Element 12, Triebelement 15 und dem zweiten elastokalorischen Element 13 ist dabei so gewählt, dass das erste elastokalorische Element 12 ausschließlich auf Druck belastet wird, und dass das zweite elastokalorische Element 13 ausschließlich auf Zug belastet wird. Der Kurbelradius 22 der ersten Kurbelwellenkröpfung 16 entspricht dabei der Hälfte der vorbestimmten maximalen Dehnung des ersten elastokalorischen Elementes 12, wobei die Dehnung eine Stauchung ist. Der Kurbelradius 23 der zweiten Kurbelwellenkröpfung 17 entspricht der Hälfte der maximalen Dehnung des zweiten elastokalorischen Elements 13, wobei die Dehnung eine Streckung ist.

Im dargestellten Fall sind sowohl die vorbestimmte maximale Dehnung bzw. Stauchung des ersten elastokalorischen Elements 12 und die vorbestimmte maximale Dehnung bzw. Streckung des zweiten elastokalorischen Elements 13, also die relativen Längenänderungen, gleich und entsprechen etwa 10 %. Durch die dargestellte Anordnung von erstem elastokalorischen Element 12, Triebelement 15 und zweitem elastokalorischen Element 13 wird sichergestellt, dass die Summe des Betrages der relativen Längenänderung oder Dehnung des ersten elastokalorischen Elements 12 und des Betrags der relativen Längenänderung beziehungsweise Dehnung des zweiten elastokalorischen Elements 13 stets größer Null ist und darüber hinaus der vorbestimmten maximalen Dehnung des ersten elastokalorischen Elements 12 und der vorbestimmten maximalen Dehnung des zweiten elastokalorischen Elements 13 entspricht.

Über einen nicht näher dargestellten, als Elektromotor ausgebildeten Antrieb wird die Kurbelwelle 14 angetrieben. Aufgrund der stets positiven Summe der Beträge der relativen Längenänderung des ersten kalorischen Elements 12 und des zweiten kalorischen Elements 13 und der Wahl des Betriebs des ersten elastokalorischen Elements 12 ausschließlich im Druckbereich und des zweiten elastokalorischen Elements 13 im Zugbereich wird sichergestellt, dass die Rückstellkräfte 44, 45 der beiden elastokalorischen Elemente 12, 13 eine Verringerung des für die zyklische Verformung des ersten und des zweiten elastokalorischen Elements 12, 13 von dem nicht näher dargestellten Antrieb aufzubringende Antriebsmoments bewirken. Insbesondere braucht der Antrieb nur ein Antriebsdrehmoment aufzubringen, welches der Überwindung der Materialhysterese des ersten elastokalorischen Elements 12 und des zweiten elastokalorischen Elements 13 sowie der Überwindung von Reibungskräften entspricht.

Beim Betrieb der Kurbelwelle 14 wird das erste elastokalorische Element 12 zyklisch negativ gedehnt, das heißt gestaucht, und das zweite elastokalorische Element 13 wird zyklisch positiv gedehnt, das heißt gestreckt. Aufgrund der gewählten Kurbelradien 22, 23 und der Verbindung der beiden elastokalorischen Elemente 12, 13 mit verschiedenen Kurbelwellenkröpfungen 16, 17 werden das erste elastokalorische Element 12 und das zweite elastokalorische Element 13 abwechselnd zwischen dem Dehnungszustand und dem Entlastungszustand verformt. Im Dehnungszustand erwärmen sich das erste elastokalorische Element 12 und das zweite elastokalorische Element 13 und geben Wärme auf die jeweils durch den ersten und den zweiten Kühlmittelkanal 10, 11 strömenden Kühlmittelströme ab. Im Entlastungszustand nehmen das erste elastokalorische Element 12 und das zweite elastokalorische Element 13 Wärme von den jeweils durch den ersten und den zweiten Kühlmittelkanal 10, 11 strömenden Kühlmittelströmen auf.

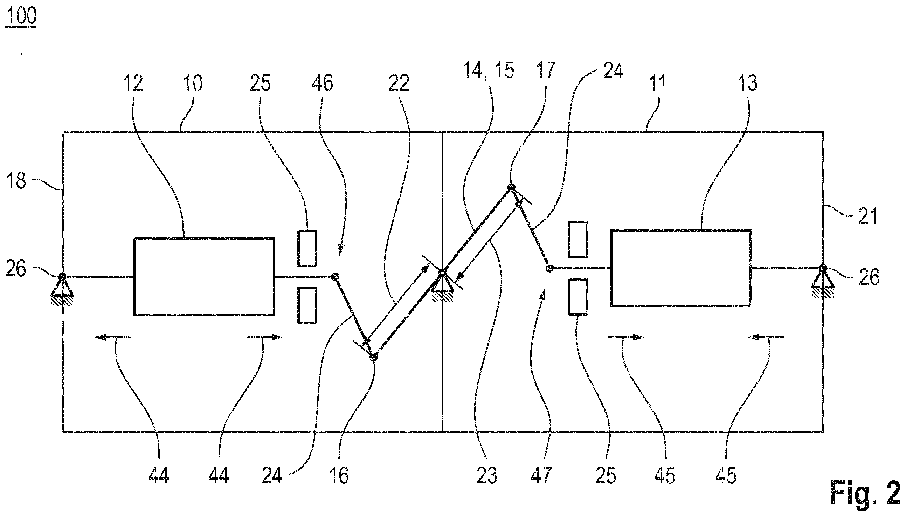

Fig. 2 zeigt eine weitere Wärmepumpe 100 im Einklang mit der Erfindung. Die Wärmepumpe 100 nach Fig. 2 unterscheidet sich von der Wärmepumpe 100 der Fig. 1 ausschließlich darin, dass durch die Verwendung von Pleueln 24 und Lagern 25 eine erste Linearführung 46 für das erste elastokalorische Element 12 und eine zweite Linearführung 47 für das zweite elastokalorische Element 13 bereitgestellt wird. Hierfür sind das erste elastokalorische Element 12 und das zweite elastokalorische Element 13 ferner mit Festlagern 26 mit den äußeren Wänden 18, 21 des ersten Kühlmittelkanals 10 und des zweiten Kühlmittelkanals 11 verbunden.

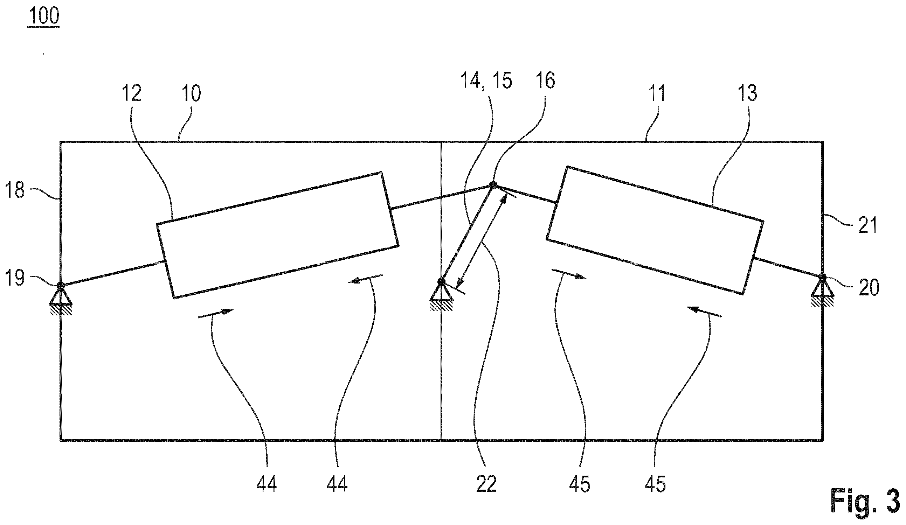

Fig. 3 zeigt eine weitere Wärmepumpe 100 im Einklang mit der Erfindung. Gegenüber der Wärmepumpe 100 nach der Fig. 1 sind das erste elastokalorische Element 12 und das zweite elastokalorische Element 13 mit derselben Kurbelwellenkröpfung 16 der Kurbelwelle 14 verbunden. In diesem Fall ist der Aufbau zudem so gewählt, dass die elastokalorischen Elemente 12, 13 beide ausschließlich im Zugbereich betrieben werden. Alternativ ist es auch möglich, dass sowohl das erste elastokalorische Element 12 als auch das zweite elastokalorische Element 13 beide ausschließlich im Druckbereich betrieben werden. Wie auch bei der Wärmepumpe 100 nach Fig. 1 ist der Kurbelradius 22 der einzigen Kurbelwellenkröpfung 16 so eingestellt, dass dieser der Hälfte der vorbestimmten maximalen Dehnung des ersten elastokalorischen Elements 12 und des zweiten elastokalorischen Elements 13 entspricht.

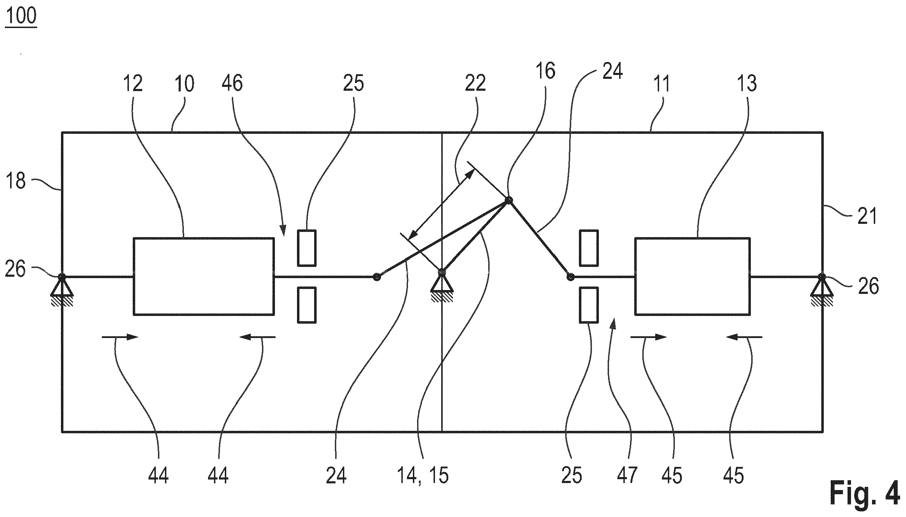

Fig. 4 zeigt eine weitere Wärmepumpe 100 im Einklang mit der Erfindung, bei welcher analog zu der Wärmepumpe 100 der Fig. 2 mittels Pleueln 24 und Lagern 25 eine erste Linearführung 46 für das erste elastokalorische Element 12 und eine zweite Linearführung 47 für das zweite elastokalorische Element 13 bereitgestellt werden.

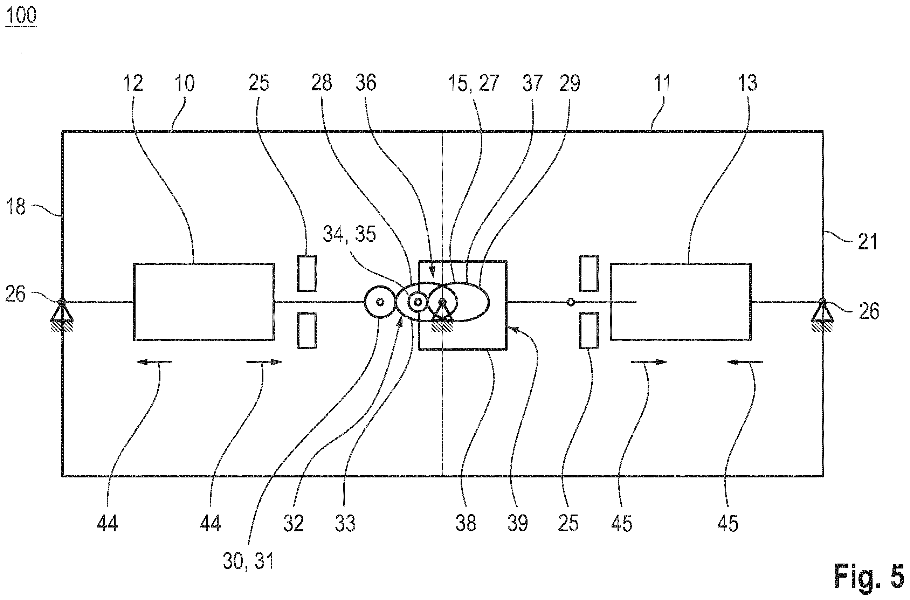

Fig. 5 zeigt eine weitere Wärmepumpe 100 im Einklang mit der Erfindung. Bei der Wärmepumpe 100 der Fig. 5 ist das erste elastokalorische Element 12 im ersten Kühlmittelkanal 10 über ein Festlager 26 an der äußeren Wand 18 des ersten Kühlmittelkanals 10 befestigt und durch ein dafür vorgesehenes Lager 25 linear geführt. Entsprechend ist auch das zweite elastokalorische Element 13 im zweiten Kühlmittelkanal 11 angeordnet und über ein Festlager 26 an der äußeren Wand 21 des zweiten Kühlmittelkanals 11 befestigt und mittels eines Lagers 25 linear geführt. Das Triebelement 15 ist im gezeigten Fall als eine Nockenwelle 27 mit einem ersten Nocken 28 und einem zweiten Nocken 29 ausgebildet. Das erste elastokalorische Element 12 wird ausschließlich im Druckbereich und das zweite elastokalorische Element 13 wird ausschließlich im Zugbereich betrieben. Hierfür ist das erste elastokalorische Element 12 mit einem als Wälzlager 30 ausgebildeten Abtastmittel 31 versehen, wobei das Abtastmittel 31 auf einem dem ersten elastokalorischen Element 12 zugewandten Bereich 32 der Nockenkontur 33 des ersten Nockens 28 der Nockenwelle 27 abläuft. Das zweite elastokalorische Element 13 ist mit einem zweiten als Wälzlager 34 ausgebildeten Abtastmittel 35 verbunden, wobei das zweite Abtastmittel 35 auf einem dem zweiten elastokalorischen Element 13 abgewandten Bereich 36 der Nockenkontur 37 des zweiten Nockens 29 der Nockenwelle 27 abläuft. Für die Kraftübertragung ist dabei ein Käfig 38 vorgesehen, welcher den zweiten Nocken 29 umschließt und welcher mit der dem zweiten elastokalorischen Element 13 zugewandten Seite 39 mit diesem verbunden ist. Die Differenz aus dem maximalen und minimalen Nockenhub des ersten Nockens 28 entspricht der vorbestimmten maximalen Dehnung des ersten elastokalorischen Elements 12, und die Differenz aus dem maximalen und dem minimalen Nockenhub des zweiten Nockens 29 entspricht der vorbestimmten maximalen Dehnung des zweiten elastokalorischen Elements 13.

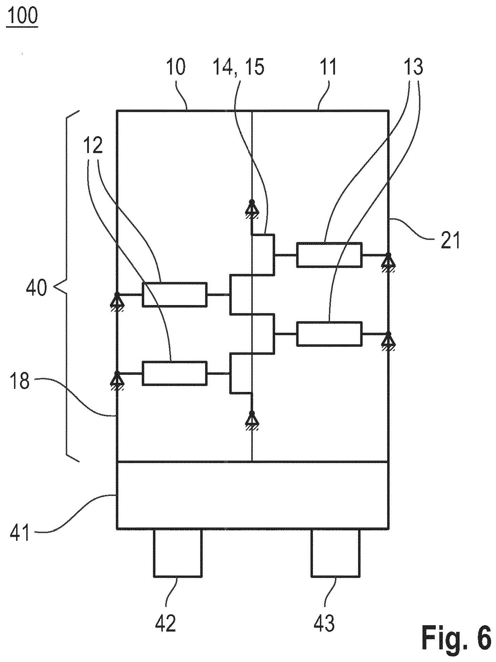

Fig. 6 zeigt eine weitere Wärmepumpe 100 im Einklang mit der Erfindung. Die Wärmepumpe 100 ist in einer Aufsicht von oben senkrecht zur Ausrichtung des ersten Kühlmittelkanals 10 und des zweiten Kühlmittelkanals 11 gezeigt. Das Triebelement 15 ist als Kurbelwelle 14 ausgebildet. Im ersten Kühlmittelkanal 10 befinden sich mehrere erste elastokalorische Elemente 12, und im zweiten Kühlmittelkanal 11 befinden sich mehrere zweite elastokalorische Elemente 13. Darüber hinaus kann der erste Abschnitt 40 der Wärmepumpe 100, welcher den ersten Kühlmittelkanal 10, den zweiten Kühlmittelkanal 11, die Kurbelwelle 14 und die mehreren ersten elastokalorischen Elemente 12 und die mehreren zweiten elastokalorischen Elemente 13 umfasst, gemäß einer der Wärmepumpen 100 nach den Fig. 1 bis 5 ausgebildet sein. Die Wärmepumpe 100 der Fig. 6 weist ferner eine Umleitvorrichtung 41 auf, welche ausgebildet ist, den aus dem ersten Kühlmittelkanal 10 austretenden ersten Kühlmittelstrom und den aus dem zweiten Kühlmittelkanal 11 austretenden zweiten Kühlmittelstrom zyklisch und abwechselnd in einen ersten Kühlmittelauslass 42 und einen zweiten Kühlmittelauslass 43 umzuleiten. Hierfür kann die Umleitvorrichtung 41 eine geeignete Ventilsteuerung aufweisen. Durch die Umleitvorrichtung 41 wird sichergestellt, dass das zyklisch in dem ersten Kühlmittelkanal 10 und in dem zweiten Kühlmittelkanal 11 erwärmte und abgekühlte Kühlmittel jeweils in einen dafür vorgesehenen Kühlmittelauslass 42 einer Heißseite der Wärmepumpe 100 und einen Kühlmittelauslass 43 einer Kaltseite der Wärmepumpe 100 geleitet wird.

### Bezugszeichenliste

- 100: Wärmepumpe
- 10: Erster Kühlmittelkanal
- 11: Zweiter Kühlmittelkanal
- 12: Erstes elastokalorisches Element
- 13: Zweites elastokalorisches Element
- 14: Kurbelwelle
- 15: Triebelement
- 16: Erste Kurbelwellenkröpfung
- 17: Zweite Kurbelwellenkröpfung
- 18: Äußere Wand
- 19: Drehgelenk
- 20: Drehgelenk
- 21: Äußere Wand
- 22: Kurbelradius
- 23: Kurbelradius
- 24: Pleuel
- 25: Lager
- 26: Festlager
- 27: Nockenwelle
- 28: Erster Nocken
- 29: Zweiter Nocken
- 30: Wälzlager
- 31: Abtastmittel
- 32: Bereich
- 33: Nockenkontur
- 34: Wälzlager
- 35: Abtastmittel
- 36: Bereich
- 37: Nockenkontur
- 38: Käfig
- 39: Seite
- 40: Erster Abschnitt
- 41: Umleitvorrichtung
- 42: Erster Kühlmittelauslass
- 43: Zweiter Kühlmittelauslass
- 44: Rückstellkraft
- 45: Rückstellkraft
- 46: Erste Linearführung
- 47: Zweite Linearführung

## Patentansprüche

1. Wärmepumpe (100) umfassend einen ersten Kühlmittelkanal (10) für einen ersten Kühlmittelstrom, einen zweiten Kühlmittelkanal (11) für einen zweiten Kühlmittelstrom, mindestens ein erstes elastokalorisches Element (12), mindestens ein zweites elastokalorisches Element (13) und ein Triebelement (15), wobei das erste elastokalorische Element (12) in dem ersten Kühlmittelkanal (10) angeordnet ist, wobei das zweite elastokalorische Element (13) in dem zweiten Kühlmittelkanal (11) angeordnet ist, wobei das Triebelement (15) ausgebildet ist, das erste elastokalorische Element (12) zyklisch zu verformen und das zweite elastokalorische Element (13) zyklisch zu verformen, wobei das erste elastokalorische Element (12) und das zweite elastokalorische Element (13) und das Triebelement (15) derart angeordnet und miteinander verbunden sind, dass die Summe des Betrags der relativen Längenänderung des ersten elastokalorischen Elements (12) und des Betrags der relativen Längenänderung des zweiten elastokalorischen Elements (13) stets größer Null ist, **dadurch gekennzeichnet, dass** das Triebelement (15) eine Kurbelwelle (14) ist, oder dass das Triebelement (15) eine Nockenwelle (27) ist, wobei eine Differenz aus einem maximalem und einem minimalem Nockenhub eines Nockens (28, 29) der Nockenwelle (27) der vorgesehenen maximalen Dehnung des ersten elastokalorischen Elements (12) und/oder der vorgesehenen maximalen Dehnung des zweiten elastokalorischen Elements (13) entspricht.

2. Wärmepumpe (100) nach Anspruch 1, **dadurch gekennzeichnet, dass** die Summe des Betrags der relativen Längenänderung des ersten elastokalorischen Elements (12) und des Betrags der relativen Längenänderung des zweiten elastokalorischen Elements (13) im Wesentlichen einer vorbestimmten maximalen Dehnung des ersten elastokalorischen Elements (12) und/oder einer vorbestimmten maximalen Dehnung des zweiten elastokalorischen Elements (13) entspricht.

3. Wärmepumpe (100) nach Anspruch 1 oder 2, **dadurch gekennzeichnet, dass** die Wärmepumpe einen Antrieb, insbesondere einen Elektromotor, ausgebildet zum Antreiben des Triebelements (15) umfasst, wobei bevorzugt das erste elastokalorische Element (12) und das zweite elastokalorische Element (13) und das Triebelement (15) derart angeordnet und miteinander verbunden sind, dass ein für die zyklische Verformung des ersten elastokalorischen Elements (12) und für die zyklische Verformung des zweiten elastokalorischen Elements (13) von dem Antrieb aufzubringendes Antriebsmoment nur einem für die Überwindung einer Materialhysterese des ersten elastokalorischen Elements (12) und des zweiten elastokalorischen Elements (13) und für die Überwindung einer Reibung notwendigen Moment entspricht.

4. Wärmepumpe (100) nach einem der vorgenannten Ansprüche, **dadurch gekennzeichnet, dass** das erste elastokalorische Element (12) und das zweite elastokalorische Element (13) und das Triebelement (15) derart angeordnet und miteinander verbunden sind, dass das erste elastokalorische Element (12) während der zyklischen Verformung ausschließlich auf Zug oder ausschließlich auf Druck belastet wird, und dass das zweite elastokalorische Element (13) während der zyklischen Verformung ausschließlich auf Druck oder ausschließlich auf Zug belastet wird.

5. Wärmepumpe (100) nach einem der vorgenannten Ansprüche, **dadurch gekennzeichnet, dass** genau ein Triebelement (15) vorgesehen ist, und/oder dass das erste elastokalorische Element (12) über ein Drehgelenk (19) mit einer äußeren Wand (18) des ersten Kühlmittelkanals (10) verbunden ist, und/oder dass das zweite elastokalorische Element (13) über ein Drehgelenk (20) mit einer äußeren Wand (21) des zweiten Kühlmittelkanals (11) verbunden ist.

6. Wärmepumpe (100) nach einem der vorgenannten Ansprüche, **dadurch gekennzeichnet, dass** ein Kurbelradius (22, 23) der Kurbelwelle (14) der Hälfte der vorbestimmten maximalen Dehnung des ersten elastokalorischen Elements (12) und/oder der Hälfte der vorgesehenen maximalen Dehnung des zweiten elastokalorischen Elements (13) entspricht, und/oder wobei das erste elastokalorische Element (12) und das zweite elastokalorische Element (13) mit derselben Kurbelwellenkröpfung (16) der Kurbelwelle (14) verbunden sind, oder wobei das erste elastokalorische Element (12) und das zweite elastokalorische Element (13) mit verschiedenen, bevorzugt um 180° versetzten, Kurbelwellenkröpfungen (16, 17) der Kurbelwelle (14) verbunden sind.

7. Wärmepumpe (100) nach einem der Ansprüche 1 bis 5 , **dadurch gekennzeichnet, dass** das erste elastokalorische Element (12) mit einem ersten Abtastmittel (31), bevorzugt einem ersten Wälzlager (30), insbesondere bevorzugt einem ersten Nadellager, verbunden ist, wobei das erste Abtastmittel (31) auf einer Nockenkontur (33) eines ersten Nockens (28) der Nockenwelle (27) abläuft, und dass das zweite elastokalorische Element (13) mit einem zweiten Abtastmittel (35), bevorzugt einem zweiten Wälzlager (34), insbesondere bevorzugt einem zweiten Nadellager, verbunden ist, wobei das zweite Abtastmittel (35) auf einer Nockenkontur (37) eines zweiten Nockens (29) der Nockenwelle (27) abläuft, wobei bevorzugt das erste Abtastmittel (31) auf einem dem ersten elastokalorischen Element (12) zugewandten Bereich (32) der Nockenkontur (33) des ersten Nockens (28) der Nockenwelle (27) abläuft oder wobei das erste Abtastmittel (31) auf einem dem ersten elastokalorischen Element (12) abgewandten Bereich der Nockenkontur (33) des ersten Nockens (28) der Nockenwelle (27) abläuft, und/oder wobei das zweite Abtastmittel (35) auf einem dem zweiten elastokalorischen Element (13) zugewandten Bereich der Nockenkontur (37) des zweiten Nockens (29) der Nockenwelle (27) abläuft oder wobei das zweite Abtastmittel (35) auf einem dem zweiten elastokalorischen Element (13) abgewandten Bereich (36) der Nockenkontur (37) des zweiten Nockens (29) der Nockenwelle (27) abläuft.

8. Wärmepumpe (100) nach einem der vorgenannten Ansprüche, **dadurch gekennzeichnet, dass** eine erste Linearführung (46) für das erste elastokalorische Element (12) vorgesehen ist, und/oder dass eine zweite Linearführung (47) für das zweite elastokalorische Element (13) vorgesehen ist, und/oder dass eine Umleitvorrichtung (41) vorgesehen ist, wobei die Umleitvorrichtung (41) ausgebildet ist, den aus dem ersten Kühlmittelkanal (10) austretenden ersten Kühlmittelstrom und den aus dem zweiten Kühlmittelkanal (11) austretenden zweiten Kühlmittelstrom zyklisch und/oder abwechselnd in einen ersten Kühlmittelauslass (42) und einen zweiten Kühlmittelauslass (43) umzuleiten.

9. Kraftfahrzeug umfassend eine Wärmepumpe nach einem der vorgenannten Ansprüche.

## Claims

1. Heat pump (100) comprising a first coolant channel (10) for a first coolant flow, a second coolant channel (11) for a second coolant flow, at least one first elastocaloric element (12), at least one second elastocaloric element (13), and a drive element (15), wherein the first elastocaloric element (12) is arranged in the first coolant channel (10), wherein the second elastocaloric element (13) is arranged in the second coolant channel (11), wherein the drive element (15) is configured to cyclically deform the first elastocaloric element (12) and to cyclically deform the second elastocaloric element (13), wherein the first elastocaloric element (12) and the second elastocaloric element (13) and the drive element (15) are arranged and connected to each other in such a way that the sum of the amount of relative length change of the first elastocaloric element (12) and the amount of relative length change of the second elastocaloric element (13) is always greater than zero, **characterized in that** the drive element (15) is a crankshaft (14), or **in that** the drive element (15) is a camshaft (27), wherein a difference between a maximum and a minimum cam lift of a cam (28, 29) of the camshaft (27) corresponds to the intended maximum elongation of the first elastocaloric element (12) and/or the intended maximum elongation of the second elastocaloric element (13).

2. Heat pump (100) according to claim 1, **characterized in that** the sum of the amount of relative length change of the first elastocaloric element (12) and the amount of relative length change of the second elastocaloric element (13) corresponds substantially to a predetermined maximum elongation of the first elastocaloric element (12) and/or a predetermined maximum elongation of the second elastocaloric element (13).

3. Heat pump (100) according to claim 1 or 2, **characterized in that** the heat pump comprises a drive, in particular an electric motor, configured to drive the drive element (15), wherein the first elastocaloric element (12) and the second elastocaloric element (13) and the drive element (15) are preferably arranged and connected to each other in such a way that a drive torque to be applied by the drive for the cyclic deformation of the first elastocaloric element (12) and for the cyclic deformation of the second elastocaloric element (13) corresponds only to a torque necessary for overcoming a material hysteresis of the first elastocaloric element (12) and the second elastocaloric element (13) and for overcoming friction.

4. Heat pump (100) according to one of the preceding claims, **characterized in that** the first elastocaloric element (12) and the second elastocaloric element (13) and the drive element (15) are arranged and connected to each other in such a way that the first elastocaloric element (12) is subjected exclusively to tension or exclusively to compression during cyclic deformation, and that the second elastocaloric element (13) is subjected exclusively to compression or exclusively to tension during cyclic deformation.

5. Heat pump (100) according to one of the preceding claims, **characterized in that** exactly one drive element (15) is provided, and/or that the first elastocaloric element (12) is connected to an outer wall (18) of the first coolant channel (10) via a pivot joint (19), and/or that the second elastocaloric element (13) is connected to an outer wall (21) of the second coolant channel (11) via a pivot joint (20).

6. Heat pump (100) according to one of the preceding claims, **characterized in that** a crank radius (22, 23) of the crankshaft (14) corresponds to half of the predetermined maximum elongation of the first elastocaloric element (12) and/or half of the intended maximum elongation of the second elastocaloric element (13), and/or wherein the first elastocaloric element (12) and the second elastocaloric element (13) are connected to the same crankshaft bend (16) of the crankshaft (14), or wherein the first elastocaloric element (12) and the second elastocaloric element (13) are connected to different crankshaft bends (16, 17) of the crankshaft (14), which are preferably offset by 180°.

7. Heat pump (100) according to one of claims 1 to 5, **characterized in that** the first elastocaloric element (12) is connected to a first scanning means (31), preferably a first roller bearing (30), in particular preferably a first needle bearing, wherein the first scanning means (31) runs on a cam contour (33) of a first cam (28) of the camshaft (27), and that the second elastocaloric element (13) is connected to a second scanning means (35), preferably a second roller bearing (34), in particular preferably a second needle bearing, wherein the second scanning means (35) runs on a cam contour (37) of a second cam (29) of the camshaft (27), wherein preferably the first scanning means (31) runs on a region (32) of the cam contour (33) of the first cam (28) of the camshaft (27) facing the first elastocaloric element (12) of the cam contour (33) of the first cam (28) of the camshaft (27), or wherein the first scanning means (31) runs on a region of the cam contour (33) of the first cam (28) of the camshaft (27) facing away from the first elastocaloric element (12), and/or wherein the second scanning means (35) runs on a region of the cam contour (37) of the second cam (29) of the camshaft (27) facing the second elastocaloric element (13), or wherein the second scanning means (35) runs on a region (36) of the cam contour (37) of the second cam (29) of the camshaft (27) facing away from the second elastocaloric element (13).

8. Heat pump (100) according to one of the preceding claims, **characterized in that** a first linear guide (46) is provided for the first elastocaloric element (12), and/or **in that** a second linear guide (47) is provided for the second elastocaloric element (13), and/or that a diversion device (41) is provided, wherein the diversion device (41) is configured to divert the first coolant flow emerging from the first coolant channel (10) and the second coolant flow emerging from the second coolant channel (11) cyclically and/or alternately into a first coolant outlet (42) and a second coolant outlet (43).

9. Motor vehicle comprising a heat pump according to one of the preceding claims.

## Revendications

1. Pompe à chaleur (100) comprenant un premier canal de réfrigérant (10) pour un premier flux de réfrigérant, un deuxième canal de réfrigérant (11) pour un deuxième flux de réfrigérant, au moins un premier élément élastocalorique (12), au moins un deuxième élément élastocalorique (13) et un élément d'entraînement (15), le premier élément élastocalorique (12) étant disposé dans le premier canal de réfrigérant (10), le deuxième élément élastocalorique (13) étant disposé dans le deuxième canal de réfrigérant (11), l'élément d'entraînement (15) étant conçu pour déformer cycliquement le premier élément élastocalorique (12) et pour déformer cycliquement le deuxième élément élastocalorique (13), le premier élément élastocalorique (12) et le deuxième élément élastocalorique (13) et l'élément d'entraînement (15) étant disposés et reliés entre eux de telle sorte que la somme de la valeur de la variation relative de longueur du premier élément élastocalorique (12) et de la valeur de la variation relative de longueur du deuxième élément élastocalorique (13) soit toujours supérieure à zéro, **caractérisé en ce que** l'élément d'entraînement (15) est un vilebrequin (14) ou **en ce que** l'élément d'entraînement (15) est un arbre à cames (27), une différence entre une levée maximale et une levée minimale d'une came (28, 29) de l'arbre à cames (27) correspond à l'allongement maximal prévu du premier élément élastocalorique (12) et/ou à l'allongement maximal prévu du deuxième élément élastocalorique (13).

2. Pompe à chaleur (100) selon la revendication 1, **caractérisée en ce que** la somme de la valeur de la variation relative de longueur du premier élément élastocalorique (12) et de la valeur de la variation relative de longueur du deuxième élément élastocalorique (13) correspond essentiellement à un allongement maximal prédéterminé du premier élément élastocalorique (12) et/ou à un allongement maximal prédéterminé du deuxième élément élastocalorique (13).

3. Pompe à chaleur (100) selon la revendication 1 ou 2, **caractérisée en ce que** la pompe à chaleur comprend un entraînement, en particulier un moteur électrique, conçu pour entraîner l'élément d'entraînement (15), le premier élément élastocalorique (12) et le deuxième élément élastocalorique (13) et l'élément d'entraînement (15) sont de préférence disposés et reliés entre eux de telle sorte qu'un couple d'entraînement à appliquer par l'entraînement pour la déformation cyclique du premier élément élastocalorique (12) et pour la déformation cyclique du deuxième élément élastocalorique (13) doit correspondre uniquement à un couple nécessaire pour surmonter une hystérésis du matériau du premier élément élastocalorique (12) et du deuxième élément élastocalorique (13) et pour surmonter un frottement.

4. Pompe à chaleur (100) selon l'une des revendications précédentes, **caractérisée en ce que** le premier élément élastocalorique (12) et le deuxième élément élastocalorique (13) et l'élément d'entraînement (15) sont disposés et reliés entre eux de telle sorte que le premier élément élastocalorique (12) est soumis exclusivement à une traction ou exclusivement à une compression pendant la déformation cyclique, et que le deuxième élément élastocalorique (13) est soumis exclusivement à une compression ou exclusivement à une traction pendant la déformation cyclique.

5. Pompe à chaleur (100) selon l'une des revendications précédentes, **caractérisée en ce qu'**un seul élément d'entraînement (15) est prévu, et/ou **en ce que** le premier élément élastocalorique (12) est relié à une paroi extérieure (18) du premier canal de refroidissement (10) par l'intermédiaire d'une articulation pivotante (19), et/ou **en ce que** le deuxième élément élastocalorique (13) est relié à une paroi extérieure (21) du deuxième canal de refroidissement (11) par l'intermédiaire d'une articulation pivotante (20).

6. Pompe à chaleur (100) selon l'une des revendications précédentes, **caractérisée en ce qu'**un rayon de manivelle (22, 23) du vilebrequin (14) correspond à la moitié de l'allongement maximal prédéterminé du premier élément élastocalorique (12) et/ou à la moitié de l'allongement maximal prévu du deuxième élément élastocalorique (13), et/ou dans laquelle le premier élément élastocalorique (12) et le deuxième élément élastocalorique (13) sont reliés au même coude de vilebrequin (16) du vilebrequin (14), ou dans laquelle le premier élément élastocalorique (12) et le deuxième élément élastocalorique (13) sont reliés à des coudes de vilebrequin différents (16, 17) du vilebrequin (14), de préférence décalés de 180°.

7. Pompe à chaleur (100) selon l'une des revendications 1 à 5 , **caractérisée en ce que** le premier élément élastocalorique (12) est relié à un premier moyen de détection (31), de préférence un premier palier à roulement (30), en particulier de préférence un premier palier à aiguilles, le premier moyen de détection (31) se déplaçant sur un contour de came (33) d'une première came (28) de l'arbre à cames (27), et **en ce que** le deuxième élément élastocalorique (13) est relié à un deuxième moyen de détection (35), de préférence un deuxième palier à roulement (34), en particulier de préférence un deuxième palier à aiguilles, le deuxième moyen de détection (35) se déplaçant sur un contour de came (37) d'une deuxième came (29) de l'arbre à cames (27), le premier moyen de détection (31) se déplaçant de préférence sur une zone (32) tournée vers le premier élément élastocalorique (12) du contour de came (33) de la première came (28) de l'arbre à cames (27) ou le premier moyen de détection (31) se déplaçant sur une zone du contour de came (33) de la première came (28) de l'arbre à cames (27) opposée au premier élément élastocalorique (12), et/ou le deuxième moyen de détection (35) se déplace sur une zone du contour de came (37) de la deuxième came (29) de l'arbre à cames (27) tournée vers le deuxième élément élastocalorique (13), ou le deuxième moyen de détection (35) se déplace sur une zone (36) du contour de came (37) de la deuxième came (29) de l'arbre à cames (27) opposée au deuxième élément élastocalorique (13).

8. Pompe à chaleur (100) selon l'une des revendications précédentes, **caractérisée en ce qu'**un premier guidage linéaire (46) est prévu pour le premier élément élastocalorique (12), et/ou **en ce qu'**un deuxième guidage linéaire (47) est prévu pour le deuxième élément élastocalorique (13), et/ou **en ce qu'**un dispositif de dérivation (41) est prévu, le dispositif de dérivation (41) étant conçu pour dévier de manière cyclique et/ou alternée le premier flux de réfrigérant sortant du premier canal de réfrigérant (10) et le deuxième flux de réfrigérant sortant du deuxième canal de réfrigérant (11) vers une première sortie de réfrigérant (42) et une deuxième sortie de réfrigérant (43).

9. Véhicule automobile comprenant une pompe à chaleur selon l'une des revendications précédentes.
